(19) Europäisches Patentamt / European Patent Office / Office européen des brevets

(11) **EP 4 179 281 B1**

(12) **EUROPÄISCHE PATENTSCHRIFT**

(45) Veröffentlichungstag und Bekanntmachung des Hinweises auf die Patenterteilung:
**24.06.2026  Patentblatt 2026/26**

(21) Anmeldenummer: **22716329.2**

(22) Anmeldetag: **22.03.2022**

(51) Internationale Patentklassifikation (IPC):
**G01J 3/02** *(2006.01)*  **G01B 11/02** *(2006.01)*
**G01B 11/06** *(2006.01)*  **G01J 3/18** *(2006.01)*

(52) Gemeinsame Patentklassifikation (CPC):
**G01J 3/0208; G01B 11/0608; G01J 3/0256; G01J 3/18;** G01B 2210/50

(86) Internationale Anmeldenummer:
**PCT/DE2022/200054**

(87) Internationale Veröffentlichungsnummer:
**WO 2023/051877 (06.04.2023 Gazette 2023/14)**

(54) **SPEKTROMETER, ABSTANDSMESSSYSTEM SOWIE VERFAHREN ZUM BETREIBEN EINES SPEKTROMETERS**

SPECTROMETER, DISTANCE MEASURING SYSTEM, AND METHOD FOR OPERATING A SPECTROMETER

SPECTROMÈTRE, SYSTÈME DE MESURE DE DISTANCE, ET PROCÉDÉ DE FONCTIONNEMENT D'UN SPECTROMÈTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **30.09.2021  DE 102021211046**

(43) Veröffentlichungstag der Anmeldung:
**17.05.2023  Patentblatt 2023/20**

(73) Patentinhaber: **Micro-Epsilon Optronic GmbH**
**01465 Dresden-Langebrück (DE)**

(72) Erfinder:
• **OTTO, Tobias**
**01465 Langebrück (DE)**
• **HAUSSMANN, Alexander**
**01968 Hörlitz (DE)**
• **GRUEBER, Christoph**
**01127 Dresden (DE)**

(74) Vertreter: **Ullrich & Naumann PartG mbB**
**Schneidmühlstrasse 21**
**69115 Heidelberg (DE)**

(56) Entgegenhaltungen:
DE-A1- 102017 122 689     US-A- 5 329 353
US-A1- 2006 038 994      US-A1- 2014 233 029
US-B1- 6 757 113

**Beschreibung**

Die Erfindung betrifft ein Spektrometer mit einer Linse, einem dispersiven Element und einem Detektor, wobei ein auf die Linse geführtes Messlicht mittels der Linse auf das dispersive Element projiziert, von dem dispersiven Element spektral zerlegt zur Linse zurück reflektiert und mittels der Linse auf den Detektor geführt wird.

Des Weiteren betrifft die vorliegende Erfindung ein Abstandsmesssystem, insbesondere ein konfokal-chromatisches Abstandsmesssystem, mit einem derartigen Spektrometer.

Weiterhin betrifft die vorliegende Erfindung ein Verfahren zum Betreiben eines derartigen Spektrometers, wobei das Spektrometer eine Linse, ein dispersives Element und einen Detektor aufweist, wobei ein auf die Linse geführtes Messlicht mittels der Linse auf das dispersive Element projiziert, von dem dispersiven Element spektral zerlegt zur Linse zurück reflektiert und mittels der Linse auf den Detektor geführt wird.

Die Leistungsfähigkeit eines beispielsweise konfokal-chromatischen Abstandsmesssystems hängt entscheidend von seinem Auflösungsvermögen und der mit ihm realisierbaren Messgeschwindigkeit ab. Ein wichtiges Verfahren ist die eindimensionale, konfokal-chromatische Abstandsmessung mittels entsprechenden optischen Sensoren. Hierbei wird Weißlicht mit einer Optik auf eine Oberfläche projiziert. Die Optik ist hierbei nicht chromatisch korrigiert, sondern sie ist so ausgelegt, dass sich entlang der Messachse ein eindeutiger chromatischer Längsfehler ergibt. Dies führt dazu, dass sich im Spektrum des von der Probe reflektierten Messlichts ein Maximum bei einer Wellenlänge ausprägt, die sich eindeutig einem Abstand zwischen Probe und Messkopf zuordnen lässt. Als Auswerteeinheit entsprechender Abstandsmesssysteme oder Sensoren dienen Spektrometer, die beispielsweise zwei Sammellinsen, ein dispersives Element und einen Detektor aufweisen, wobei ein auf die erste der beiden Linsen geführtes Messlicht mittels dieser Linse auf das dispersive Element projiziert, von dem dispersiven Element spektral zerlegt und mittels der zweiten Linse auf den Detektor geführt wird.

Für einige Einsatzbereiche ist es wünschenswert, ein solches Spektrometer und damit letztendlich ein entsprechendes Abstandsmesssystem oder einen entsprechenden Sensor in seinen Abmessungen deutlich zu verkleinern, ohne dabei Performance-Einbußen zu aktuellen Systemen hinnehmen zu müssen. Die Performance eines Spektrometers ergibt sich aus der Sensitivität und dem spektralen Auflösungsvermögen.

Die Sensitivitätsforderung ist dadurch begründet, dass die Abstandsmesstechnik heutzutage immer höhere Messraten erfordert. Da die Quanteneffizienz von Detektoren jedoch endlich ist, muss das auszuwertende Messsignal eine Mindestlichtstärke aufweisen. Dies kann einerseits durch eine Intensivierung des Beleuchtungsstrahls erreicht werden, was aber mit verfügbaren optischen Strahlungsquellen entsprechender Langlebigkeit und Robustheit nur eingeschränkt möglich ist. Ein anderer, hier zu verfolgender Ansatz ist eine Optimierung unter Berücksichtigung der Lichtstärke, um auch schwächere Signale hinreichend gut auswerten zu können. Der vorliegenden Erfindung liegt die Aufgabe zugrunde, ein Spektrometer, ein Abstandsmesssystem sowie ein Verfahren zum Betreiben eines Spektrometers anzugeben, wonach eine hohe Leistung bei kompakter Baugröße mit konstruktiv einfachen Mitteln ermöglicht ist.

Erfindungsgemäß wird die voranstehende Aufgabe durch ein Spektrometer mit den Merkmalen des Anspruchs 1, ein Abstandsmesssystem mit den Merkmalen des Anspruchs 10 sowie durch ein Verfahren zum Betreiben eines Spektrometers mit den Merkmalen des Anspruchs 11 gelöst.

Danach ist das Spektrometer gemäß Anspruch 1 derart ausgestaltet und weitergebildet, dass die Linse eine Einfachlinse oder Einzellinse mit mindestens einer nicht sphärischen Fläche zur Beeinflussung der Abbildung ist.

Gemäß Anspruch 11 ist das Verfahren derart ausgestaltet und weitergebildet, dass als Linse eine Einfachlinse oder Einzellinse mit mindestens einer nicht sphärischen Fläche zur Beeinflussung der Abbildung verwendet wird.

In erfindungsgemäßer Weise ist zunächst erkannt worden, dass durch geschickte Gestaltung der Linse die voranstehende Aufgabe auf überraschend einfache Weise gelöst wird. In weiter erfindungsgemäßer Weise ist die Linse dann im Konkreten mit mindestens einer nicht sphärischen Fläche zur einfachen Beeinflussung der Abbildung ausgestaltet. Durch die mindestens eine nicht sphärische Fläche der Linse ist es möglich, ein kompaktes Spektrometer mit nur einer einzigen Linse oder einem einzelnen Linsenelement zu realisieren, wobei eine hohe Abbildungsleistung trotz kompakter Bauweise und konstruktiv einfacher Ausgestaltung mit nur einer einzigen Linse möglich ist. In vorteilhafter Weise kommen bei dem erfindungsgemäßen Spektrometer nur sehr wenige optisch einflussnehmende Komponenten mit der einzigen Linse, dem dispersiven Element und dem Detektor zum Einsatz, was das thermische Verhalten des Spektrometers gut beherrschbar macht.

Folglich sind mit dem erfindungsgemäßen Spektrometer, dem erfindungsgemäßen Abstandsmesssystem und dem erfindungsgemäßen Verfahren ein Spektrometer, ein Abstandsmesssystem sowie ein Verfahren bereitgestellt, wonach eine hohe Leistung bei kompakter Baugröße mit konstruktiv einfachen Mitteln ermöglicht ist.

An dieser Stelle wird darauf hingewiesen, dass unter dem Begriff "Einfachlinse" oder "Einzellinse" ein einzelnes Linsenelement zu verstehen ist, sodass in diesem Dokument von dem Begriff "Einfachlinse" oder "Einzellinse" nicht nur eine einzelne, einteilige Linse, sondern auch ein mehrteiliges Linsenelement mit beispielsweise einer Dublett- oder Triplett-Anordnung oder mit zwei aneinander fixierten oder aufeinander gekitteten Freiformen und/oder Asphären umfasst ist.

Bei einem vorteilhaften Ausführungsbeispiel kann die nicht sphärische Fläche eine vorzugsweise rotationssymmetrische asphärische Fläche, Freiformfläche oder zonenabhängige diffraktive Struktur aufweisen. Je nach Anwendungsfall und individueller Erfordernis kann auf flexible Weise eine geeignete Ausgestaltung gewählt werden und eine gewünschte Leistung des Spektrometers auf einfache Weise realisiert werden.

In sehr vorteilhafter Weise kann die Linse optische Funktionen in separaten Zonen der Linse bereitstellen. Insoweit kann die Linse für unterschiedliche Funktionen genutzt werden, ohne dass es erforderlich ist, für unterschiedliche Funktionen individuelle verschiedene Linsen bereitzustellen. Dies vereinfacht den Aufbau des Spektrometers signifikant.

Bei einem weiteren vorteilhaften Ausführungsbeispiel können die optischen Funktionen Kollimation und Refokussierung für das Messlicht sein.

Insbesondere bei einem derartigen Ausführungsbeispiel kann die Beeinflussung der Abbildung eine Korrektur von Abbildungsfehlern umfassen, wobei vorzugsweise eine wellenlängenspezifische Korrektur für das spektral zerlegte Messlicht erfolgen kann, um eine Optimierung der beiden Funktionen Kollimation und Refokussierung zu ermöglichen. Hierdurch wird eine besonders hohe, wellenlängenoptimierte Leistung mit dem Spektrometer erreicht.

Hinsichtlich einer besonders hohen Leistung und einem geringen Leistungsverlust bei höheren Linienzahlen weist das dispersive Element erfindungsgemäss ein ebenes Reflexionsgitter auf.

Ein derartiges ebenes Reflexionsgitter kann leicht, reproduzierbar und günstig hergestellt werden und weist ein beherrschbares lineares Verhalten bei Temperatureinwirkung auf.

Bei einem weiteren Ausführungsbeispiel kann die Linse refraktiv, diffraktiv oder hybrid - beispielsweise diffraktive Struktur auf Freiformträger - gestaltet sein. Bei der Wahl der Gestaltung der Linse kann in flexibler Weise auf den jeweiligen Anwendungsfall Rücksicht genommen werden.

Im Hinblick auf eine hohe Leistung des Spektrometers kann die Linse durch Blankpressen, vorzugsweise Präzisionsblankpressen, oder Spritzgießen, vorzugsweise Kunststoffspritzgießen, hergestellt sein. Insbesondere mit einem Blankpressen oder Präzisionsblankpressen ist es möglich, Linsen mit komplexen Freiformoberflächen auch in größeren Stückzahlen reproduzierbar und mit hoher Qualität herzustellen.

Erfindungsgemäss ist die Eintrittsblende für das Messlicht so angeordnet, dass das Messlicht schräg auf das dispersive Element einstrahlt und etwa senkrecht vom dispersiven Element reflektiert wird, sodass eine Vergrößerung der Öffnung in spektraler Richtung entsteht, welche den Abbildungsmaßstab auf dem Detektor in spektraler Richtung verkleinert. Hierbei kann das Spektrometer bei gleicher Lichtempfindlichkeit eine höhere spektrale Auflösung erreichen oder in umgekehrter Weise bei gleicher spektraler Auflösung mehr Licht einfangen und somit lichtempfindlicher werden.

In konstruktiv einfacher Weise kann der Detektor - je nach Anwendungsfall in flexibler Weise - in einer Zeile oder in einer Matrix angeordnete Bildelemente aufweisen.

Ausführungsbeispiele des erfindungsgemäßen Spektrometers können folgende vorteilhafte Merkmale aufweisen:

Grundsätzlich können Ausführungsbeispiele des erfindungsgemäßen Spektrometers als wesentliche Teilkomponente beispielsweise eines Abstandsmesssystems unter der Maßgabe einer möglichst kompakten Baugröße auf die beiden Parameter Auflösungsvermögen und Messgeschwindigkeit optimiert sein.

Das erfindungsgemäße Spektrometer kann aufgrund seines kompakten Aufbaus grundsätzlich auch als Kompaktspektrometer bezeichnet werden.

Ein Ausführungsbeispiel eines Spektrometers der Erfindung weist eine Doppelpass-Anordnung auf, die einem Littrow-Spektrometer ähnelt. Dabei kann das Ausführungsbeispiel die folgenden Komponenten aufweisen:

a) eine Blende oder Eintrittsblende, welche beliebig - oben, unten, links, rechts

- um das Empfangselement oder den Detektor angeordnet ist.

b) ein Linsenelement oder eine Linse, das oder die zwei nicht sphärische Flächen aufweist, welche eine wellenlängenabhängige Korrektur der Abbildungsleistung durch Nutzung der optischen Fläche in verschiedenen lateralen Zonen erlauben.

c) ein planes oder ebenes Reflexionsgitter.

d) ein Empfangselement oder einen Detektor, auf das oder auf den die spektralen Komponenten des Eingangslichts oder Messlichts fokussiert werden und welches oder welcher deren Intensitäten auswertet.

e) vorzugsweise eine Trägerstruktur, welche die Integration aller optischen und elektronischen Elemente erlaubt.

Dabei kann das verwendete Linsenelement oder die verwendete Linse so gestaltet sein, dass

a) es oder sie entweder refraktiv, diffraktiv oder hybrid gestaltet ist.

b) es oder sie in einem replizierenden Verfahren hergestellt werden kann.

c) die Form der nicht sphärischen Fläche explizit eine asphärische oder eine Frei- formfläche oder eine zonenabhängige diffraktive Struktur aufweist.
d) das Linsenelement oder die Linse beschnitten oder direkt im replizierenden Verfahren quaderförmig gepresst bzw. gespritzt sein kann.

Die Anordnung der Eintrittsblende ist erfindungsgemäss so gewählt, dass es zu einer schrägen Einstrahlung des Messlichts und zu einem näherungsweise senkrechten Ausfall vom Gitter kommt, so dass es zu einer Vergrößerung der Öffnung in spektraler Richtung kommt, welches den Abbildungsmaßstab auf dem Empfangselement in spektraler Richtung verkleinert.

Die Mittenebene des Linsenelements kann sich in einem Bereich von 25 % bis 75% der Strecke zwischen Gitter und Detektor befinden.

Das verwendete Empfangselement kann dabei ein Zeilen- oder Matrixelement sein oder Zeilen, Mehrfachzeilen oder eine Matrix aufweisen.

Die Trägerstruktur kann dabei so gestaltet sein, dass sie eine quasi ideale thermisch kompensierte Anordnung und Fixierung der Komponenten erlaubt.

Zur Abschätzung der Performance von Ausführungsbeispielen des erfindungsgemäßen Spektrometers wurde eine Marktanalyse betrieben. Hierbei wurde ein Qualitätskriterium Q gebildet, dass die Performance für einen gegebenen, mindestens darstellbaren Spektralbereich gemäß folgender Beziehung beschreibt:

$$Q = \frac{\text{Lichtmenge}}{\text{Spektrale Auflösung}} = \frac{NA \times \text{Spaltbreite}}{\text{Spektrale Auflösung}}$$

Hierbei steht NA für die Numerische Apertur des Eintrittsstrahls. Die Spaltbreite ergibt sich aus der Eintrittsblende beziehungsweise dem Kerndurchmesser der einstrahlenden Faser und die Spektrale Auflösung zeigt, welche spektrale Breite auf dem Bildsensor noch getrennt auswertbar ist.

Auffällig war, dass die untersuchten, am Markt verfügbaren Spektrometer entweder eine zu große Bauform oder eine unzureichende Performance hatten. In der folgenden Tabelle sind die letzten beiden Modelle "MEO, Doppelasphäre" und "MEO, Freiformfläche" Ausführungsbeispiele der vorliegenden Erfindung. Das Ausführungsbeispiel "MEO, Doppelasphäre" entspricht dabei etwa dem Qualitätskriterium des aktuellen Spektrometers der Anmelderin, das jedoch deutlich größere Abmessungen aufweist.

| Anbieter/ Modell | Größe | Volumen | Spektrale Auflösung | Blende / Spaltbreite | NA | Qualitätskriterium Q |
|---|---|---|---|---|---|---|
| Wettbewerber 1 | 22×22×9 mm³ | 4,4 cm³ | 10,0 nm | 35 μm | 0,22 | 770 |
| Wettbewerber 2 | 35×22×13,5 mm³ | 10,4 cm³ | 5,0 nm | 50 μm | 0,18 | 1820 |
| Wettbewerber 3 | 64×42×14,5 mm³ | 39,0 cm³ | 2,5 nm | 35 μm | 0,10 | 1400 |
| MEO, Doppelasphäre | 45×30×12,5 mm³ | 16,9 cm³ | 1,7 nm | 30 μm | 0,20 | 3000 |
| MEO-Freiformlinse | 45×30×12,5 mm³ | 16,9 cm³ | 1,1 nm | 30 μm | 0,20 | 5400 |

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigt

Fig. 1   in einer schematischen Darstellung den Aufbau eines ersten Ausführungsbeispiels des erfindungsgemäßen Spektrometers und

Fig. 2   in einer schematischen Darstellung den Aufbau eines zweiten Ausführungsbeispiels des erfindungsgemäßen Spektrometers.

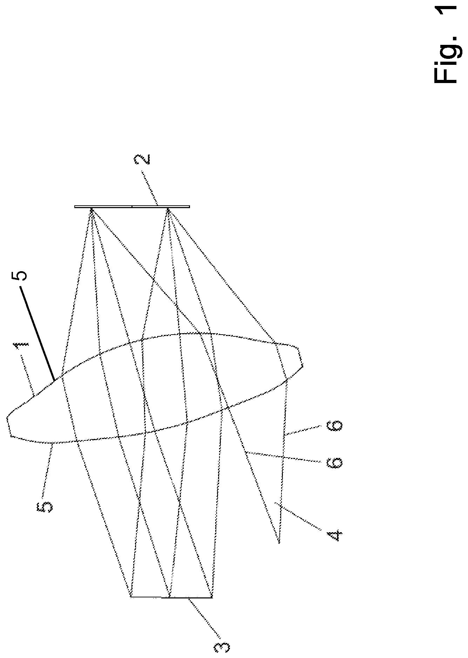

Fig. 1 zeigt in einer schematischen Darstellung den Aufbau eines ersten Ausführungsbeispiels des erfindungsgemäßen Spektrometers, wobei das Spektrometer eine Linse 1, ein dispersives Element 2 in Form eines ebenen Reflexionsgitters und einen Detektor 3 mit einer Bildzeile aufweist. Ein auf die Linse 1 geführtes Messlicht 4 wird mittels der Linse 1 auf das dispersive Element 2 projiziert, von dem dispersiven Element 2 spektral zerlegt zur Linse 1 zurück reflektiert und mittels der Linse 1 auf den Detektor 3 geführt. Das dispersive Element 2 ist in einem geeigneten, vorgebbaren Abstand von der Linse 1 angeordnet. Die Linse 1 ist im Hinblick auf eine hohe Leistung bei kompakter Baugröße mit konstruktiv einfachen Mitteln eine Einfachlinse oder Einzellinse mit zwei nicht sphärischen Flächen 5 - hier eine Doppelasphäre mit zwei nicht sphärischen Flächen 5 - zur Beeinflussung der Abbildung, insbesondere zur Korrektur von Abbildungsfehlern.

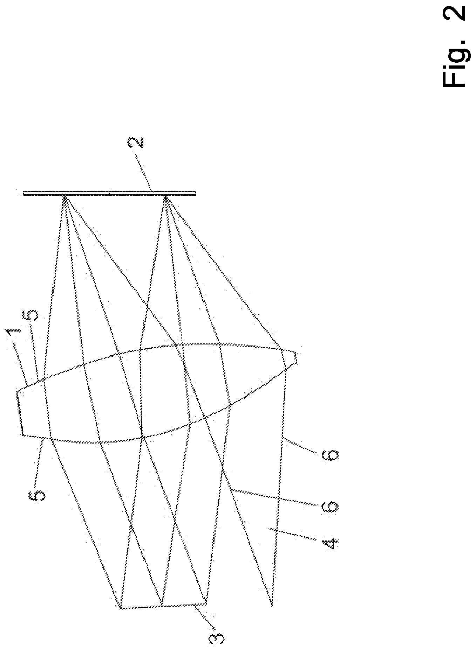

Das in Fig. 2 gezeigte Ausführungsbeispiel entspricht grundsätzlich dem in Fig. 1 gezeigten Ausführungsbeispiel, wobei im Unterschied zu dem in Fig. 1 gezeigten Ausführungsbeispiel die Linse 1 eine Einfachlinse oder Einzellinse mit einer Freiformfläche 5 - links in Fig. 2 - und mit einer dem dispersiven Element 2 zugewandten asphärischen Fläche 5 - rechts in Fig. 2 - ist.

Das Messlicht 4 wird bei beiden Ausführungsbeispielen durch eine hier nicht gezeigte Eintrittsblende auf die Linse 1 geführt, wobei der Übersichtlichkeit halber nur zwei Randstrahlen 6 des Messlichts 4 gezeigt sind.

Um Licht nach üblicher Konzeption spektral zu zerlegen, muss es zunächst gut kollimiert auf ein dispersives Element geleitet werden. Die hierdurch erzeugte spektrale Aufspaltung - Winkeldispersion - wird anschließend durch eine Fokussieroptik in eine örtliche Dispersion in der Bildebene überführt, in welcher sich der Zeilendetektor befindet.

Um ein kompaktes Spektrometer zu erzeugen, ist es Stand der Technik, den Strahl im Spektrometer zu falten. Hierfür eignet sich insbesondere das dispersive Element, da es mittig in der optischen Anordnung liegt. Bauformen sind das Prisma, das Transmissionsgitter und das Reflexionsgitter. Das Prisma hat den Nachteil der begrenzten Winkeldispersion und unvorteilhafter Baugröße. Das Reflexionsgitter zeichnet sich bei höheren Linienzahlen dem Transmissionsgitter gegenüber durch sehr geringen Leistungsverlust aus. Allgemein erlaubt eine hohe Winkeldispersion eine kürzere Fokussierungsbrennweite bei gleicher örtlicher Aufspaltung auf dem Detektorelement. Gleichzeitig steigt aber die Anforderung an das abbildende System, wenn die Öffnung des Spektrometers zum Erhalt der Sensitivität nicht reduziert werden darf.

Das Spektrometer gemäß der Erfindung ähnelt dem Prinzip des Littrow-Spektrometers. Dieses besteht in einer Ausführungsform mit einer Linse aus nur einer Linse, die zugleich Kollimationsoptik für den einfallenden Strahl und Fokussieroptik für die Abbildung des Spektrums auf der Detektorzeile ist. Ebenso findet ein ebenes Gitter als dispersives Element seine Anwendung. Beim Littrow-Spektrometer ist zudem für eine Wellenlänge - vorzugsweise mittig im gewünschten Spektralbereich - der Einfallswinkel gleich dem Beugungswinkel, so dass sich in diesem Fall die feldwinkelabhängigen Abbildungsfehler symmetrisch um die optisch nahezu ideal auskorrigierbare Zentralwellenlänge verteilen. In der Realität haben jedoch Lichtquelle und Bildelement immer einen bauartbedingten Mindestabstand, zum einen durch die erforderliche Trennung von einfallenden und ausfallenden Strahlen, zum anderen auch durch die zu fordernde örtliche Aufspaltung. Bei einer horizontal übereinanderliegenden Anordnung von Lichtquelle und Bildelement ist mit geringen Auflösungsverlusten zu rechnen. Bei entsprechend großer örtlicher Aufspaltung und Öffnung des Spektrometers sind mit einer einfachen, sphärischen Linse jedoch die entstehenden Abbildungsfehler nicht zu beherrschen. Die Lösung eines mehrlinsigen Objektivs ist hierzu auch bekannt, siehe US 9 964 443 B1. Der entscheidende Nachteil sind jedoch die hiermit verbundenen Kosten, der hohe Justageaufwand und zu erwartende größere Schwierigkeiten bei der thermischen Kompensation.

Aufgrund weiterentwickelter Herstellungsverfahren, z. B. dem Präzisionsblankpressen, ist es jedoch mittlerweile möglich, Linsen mit komplexen Freiformoberflächen auch in größeren Stückzahlen reproduzierbar herzustellen. Dies macht sich die Erfindung zunutze, um einen neuen Spektrometertyp mit komplexen optischen Flächenprofilen - Asphären, Freiformen, diffraktive Strukturen - herzustellen.

Das gewonnene Messlicht 4 wird über eine hier nicht gezeigte Eintrittsblende im divergenten Freistrahl mit Mitten- und Randstrahlen 6 auf eine Einfachlinse 1 geworfen, siehe Fig. 1 und 2. Dieser wird durch die Linse 1 kollimiert und auf ein dispersives Element 2 in Form eines ebenen Reflexionsgitters projiziert. Das Reflexionsgitter reflektiert das spektral zerlegte Lichtbündel zurück auf dieselbe Einfachlinse 1, die wiederum lenkt die Lichtbündel wellenlängensepariert auf die Bildzeile des Detektors 3. Die Erfindung zeichnet sich hierbei durch mindestens eine nicht sphärische Fläche 5 oder rotationssymmetrische Asphäre - oder optimalerweise Freiformoberfläche - aus, die die Abbildungsfehler korrigiert, die durch die relativ großen Feldwinkel entstehen. Durch die Erfindung ist es möglich, eine passgenaue, wellenlängenspezifische Korrektur des spektral zerlegten Lichtbündels zu erhalten, indem in einer Linse 1 die beiden Funktionen Kollimation und Refokussierung in separaten Zonen der Linse 1 optimiert werden.

Die Form der Blende ist hierbei unerheblich. Falls die Zeilenpixel quadratisch sind, ist diese idealerweise kreisförmig, wie beispielsweise das Ende eines Lichtwellenleiters. Sind die Pixel hingegen rechteckig, kann eine senkrecht zur Zeile stehende Schlitzblende von Vorteil sein, um die Lichtausbeute zu optimieren.

Die Herstellung von komplexen Freiformoberflächen kann beispielsweise durch Präzisionsblankpressen erfolgen. Dies ist ein hochpräzises und zugleich wirtschaftliches Umformungsverfahren für Glaslinsen. Im Gegensatz zu den bekannten Kunststoffspritzlinsen haben Glaslinsen deutlich geringere Temperatureffekte, weniger Störungsstellen im Material und eine höhere Langzeitstabilität. Eine Herstellung im Kunststoffspritzguss ist aber dennoch denkbar.

Nur durch die mindestens eine nicht sphärische Fläche - bei einem geringeren Anspruch an die Auflösung genügt auch eine Asphäre - ist es möglich, bei der platzsparenden Anordnung von Lichtquelle und Detektorzeile eine auflösungsoptimierte Korrektur umzusetzen, wodurch eine hohe Abbildungsleistung trotz kompakter Bauweise möglich wird.

Durch die Freiheit der Formgestaltung der Linsenoberfläche ist es möglich, den Abbildungsmaßstab im Bereich des Möglichen anzupassen, so dass ein verkleinertes Bild der Quelle auf dem Zeilendetektor abgebildet wird. Hierdurch kann das Spektrometer bei gleicher Lichtempfindlichkeit eine höhere spektrale Auflösung erreichen oder im Umkehrschluss bei gleicher spektraler Auflösung mehr Licht einfangen und somit lichtempfindlicher werden.

Das ebene Gitter hat den Vorteil, dass es leicht, reproduzierbar und günstig herstellbar ist und zudem ein beherrschbares, lineares Verhalten bei Temperatureinwirkung aufweist.

Insgesamt ist bei einem Ausführungsbeispiel dieses Spektrometertyps das thermische Verhalten in Grenzen beherrschbar, da

1. nur vier optisch einflussnehmende Komponenten (Blende, Linse, Gitter, Zeilendetektor) zum Einsatz kommen,
2. zwischen den optischen Komponenten nur kurze Strecken liegen und
3. keine vielteiligen Linsensysteme aus Metall-Glas-Kombinationen zum Einsatz kommen.

Vorteile von Komponenten von Ausführungsbeispielen:

Einfachlinse mit Freiformfläche vs. Dublett-Linse oder Linsensystem:

Die Idee, ein Spektrometer mit einer einzigen Linse mit Freiformoberfläche zu entwickeln hat verschiedene Aspekte:

1. Bei mindestens gleicher optischer Leistung ist eine wesentlich kompaktere Bauform - etwa Faktor 3 - möglich.
2. Die Kombination von zwei sphärischen Linsen in Form einer Dublett-Linse würde nicht die erforderliche Abbildungsleistung erreichen, da hierdurch eine Korrektur für die stark mit der Wellenlänge variierenden Feldwinkel (hohe Winkeldispersion) - im Gegensatz zur Freiformoptik - nicht möglich ist.
3. Die thermischen Einflüsse auf die optischen Eigenschaften einer einzelnen Linse sind deutlich beherrschbarer, als diejenigen auf ein Linsensystem, da die Einflüsse von Materialspannungen und Ausdehnungskoeffizienten nur einfach wirken und sich nicht gegenseitig unkontrolliert beeinflussen. Zudem fehlen potenziell problematische Komponenten wie Linsenkitt und Objektivgehäuse.
4. Das Präzisionsblankpressen ermöglicht beim heutigen Stand der Technik inzwischen eine wirtschaftliche Herstellung mit einer hohen Güte bei angemessenen Kosten.

Planes Gitter vs. Konkavgitter:

Der Vorteil des planen Gitters liegt in der Beschaffung dieses Massenproduktes. Es ist kostengünstig und in großer Varianz als Katalogprodukt am Markt verfügbar. Ein Konkavgitter ist immer eine Sonderanfertigung, da Brennweite, Linienbreite und - anordnung zu viele Variablen für ein passendes Katalogprodukt sind. Zudem ist der Herstellprozess deutlich aufwändiger, da jedes Gitter einzeln abgeformt werden muss.

Das thermische Verhalten eines planen Gitters ist ebenfalls weniger komplex als das eines Konkavgitters. Es können sich lediglich der Linienabstand und die Linientiefe verändern. Beides führt zu vorhersehbarem Verhalten, das im Aufbau kompensiert oder gegebenenfalls durch Kalibrierung korrigiert werden kann. Beim Konkavgitter hingegen würde sich mit der Temperatur auch die Brennweite verändern, was im Allgemeinen einen negativen Effekt auf die Abbildungsgüte auf der Zeile, der Mehrfachzeile oder der Bildmatrix hat.

Einordnung in den Stand der Technik:

Bekannte Spektrometer sind offenbart in US2014/233029 A1, US2006/038994 A1, US6757113 B1, US5329353 A, und DE102017122689 A1.

Das erfundene Spektrometer ähnelt technisch einem Littrow-Spektrometer und hat zugleich Eigenschaften eines Dyson-Spektrometers vorzuweisen.

Littrow-Spektrometer:

Gemäß Wikipedia ist ein Littrow-Spektrometer ein Spektrometer mit nur einer fokussierenden Optik, die gleichzeitig sowohl als Kollimator für das einfallende als auch als Objektiv für das vom dispersiven Element reflektierte Licht wirkt. Diese Anordnung wurde von Otto von Littrow (1843-1864) erdacht. Eine derartige Anordnung bezeichnet man als Autokollimationsanordnung. Das dispersive Element muss dazu das nach Wellenlängen getrennte Licht in die Einfallrichtung zurück reflektieren, was nur für eine Wellenlänge exakt erfüllbar ist. Als dispersives Element ist sowohl ein Reflexionsgitter als auch ein Prisma oder Transmissionsgitter vor einem Planspiegel möglich. Ein Reflexionsgitter muss so gedreht werden, dass die Beugungsordnung, die beobachtet werden soll, gegen die Einfallrichtung zurückgeworfen wird. Besonders für den Einsatz in Littrow-Spektrometern sind Blazegitter mit richtig gewähltem Blazewinkel geeignet. Damit das zurückgeworfene Licht detektiert werden kann, werden Eintrittsspalt und Detektor senkrecht zur Dispersionsrichtung versetzt zueinander angeordnet.

Obwohl das erfindungsgemäße Spektrometer auf den ersten Blick dem Littrow-Spektrometer mit seiner im Doppelpass genutzten Linse sehr ähnlich ist, gibt es einen entscheidenden Unterschied. Beim Littrow-Spektrometer wird das Prinzip der Autokollimation verwendet, indem der Einfallswinkel in die auf dem Hinweg kollimierende Linse mit dem Ausfallswinkel aus der auf dem Rückweg fokussierenden Linse gleich ist. Die räumliche Trennung von Eintrittsspalt und Detektor muss senkrecht zur Dispersionsrichtung erfolgen (beide liegen in der Draufsicht "übereinander"), um keine nennenswerte Verschlechterung der Abbildung zu erhalten. Bei der beschriebenen Erfindung ermöglichen es die zusätzlichen Freiheitsgrade der asphärischen oder besser noch Freiformoberfläche, die für die Kollimation und Fokussierung verantwortlichen Linsenbereiche in Grenzen unabhängig voneinander zu optimieren. Somit verwendet die Erfindung das Prinzip der Autokollimation nicht.

Dyson-Spektrometer:

Das Dyson-Spektrometer ist ein einlinsiges Spektrometer mit konkavem Reflexionsgitter mit der Besonderheit, dass die dem Gitter zugewandte Linsenoberfläche konzentrisch zur Gitterwölbung geformt und positioniert ist. Die Eintrittsblende liegt im Idealfall in der optischen Achse, im Realfall möglichst nahe dieser. Das Dyson-Spektrometer wird insbesondere für die hyperspektrale Bildgebung eingesetzt, da durch die zueinander konzentrisch ausgeführte Gitter- und Linsenoberfläche sich Abbildungsfehler weitestgehend kompensieren.

Das besondere Potential des Dyson-Spektrometers ist es, nicht nur einen Lichtfleck spektral zu zerlegen, sondern eine Linie. Diese Eigenschaft ist für die gestellte Aufgabe jedoch nicht erforderlich. Nachteilig ist gar die dafür große räumliche Ausdehnung des Spektrometers - insbesondere in der für den eindimensionalen Punkt nicht erforderlichen Vertikalen. Ein weiterer Nachteil ist das - im Gegensatz zum flachen Gitter der Erfindung - kostenintensive Konkavgitter, das zudem mit großer Präzision zur Linse positioniert werden muss, um die Forderung nach Konzentrizität von Gitter und hinterer Linsenoberfläche zu erfüllen. Hier potenzieren sich die Toleranzen der Herstellung von zwei verschiedenen optischen Elementen mit den der gegenseitigen Positionierung.

Kompaktspektrometer gemäß der US 7 817 274 B2:

Aus diesem Dokument ist eine Vielzahl von Spektrometeranordnungen mit dem Ziel einer kompakten Bauweise bekannt. Dabei kommt die Ausführungsform gemäß Fig. 6 (b) der vorliegenden Erfindung am nächsten. Der Kern dieser Ausführungsform ist eine Zylinderlinse zwischen Blende und erster Linse beziehungsweise auf dem Rückweg zwischen fokussierender Linse und Detektorzeile, die hierdurch eine deutlich geringere Bauhöhe gegenüber dem Stand der Technik hat.

Der wesentliche Unterschied zwischen dieser Ausführungsform und der vorliegenden Erfindung besteht darin, dass gemäß dieser Ausführungsform nicht eine Freiformlinse, sondern eine sphärische Dublette zum Einsatz kommt. Hierdurch ist auch - wie in Fig. 6 (b) der US 7 817 274 B2 zu sehen - der zu erreichende, vertikale Abstand von Eintrittsblende und Detektorzeile äußerst gering, um keine zu große Verringerung der Abbildungsgüte zu erhalten. Zudem liegt die Linse auch sehr nah vor dem Gitter, während die Linse der vorliegenden Erfindung in einem Bereich von 25 ... 75 % der Strecke zwischen Gitter und Detektorzeile liegt.

Zudem wird in der US 7 817 274 B2 der Eintrittsstrahl direkt hinter der Eintrittsblende durch die Zylinderlinse zunächst "flach" gedrückt, bevor die Dublette diesen kollimiert. Vor dem Auftreffen auf die Zeile werden durch dieselbe Linse dann die Spektrallinien nochmal in der Höhe gestaucht. Hier unterscheidet sich die vorliegende Erfindung dahingehend, dass die Fokuslänge durch die Freiformlinse so stark verkürzt ist, dass sich in Verbindung mit der geforderten örtlichen Aufspaltung schon ein System mit flachem Aspektverhältnis ergibt.

Hinsichtlich weiterer vorteilhafter Ausgestaltungen des erfindungsgemäßen Spektrometers, des erfindungsgemäßen Abstandsmesssystems sowie des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

**Bezugszeichenliste**

1    Linse
2    dispersives Element
3    Detektor
4    Messlicht
5    nicht sphärische Fläche
6    Randstrahl

**Patentansprüche**

1.  Spektrometer mit einer Eintrittsblende, einer Linse (1), einem dispersiven Element (2) und einem Detektor (3), wobei das Spektrometer eine Doppelpass-Anordnung aufweist, wobei auf die Linse (1) geführtes Messlicht (4) mittels der Linse (1) auf das dispersive Element (2) projiziert, von dem dispersiven Element (2) spektral zerlegt zur Linse (1) zurück reflektiert und mittels der Linse (1) auf den Detektor (3) geführt wird, wobei die Linse (1) eine Einfachlinse oder Einzellinse zur Beeinflussung einer Abbildung auf den Detektor (3) ist und wobei das dispersive Element (2) in Form eines ebenen Reflexionsgitters realisiert und in einem geeigneten, vorgebbaren Abstand von der Linse (1) angeordnet ist,

    **dadurch gekennzeichnet, dass** die Einfachlinse oder Einzellinse zwei nicht sphärische Flächen (5) oder eine Freiformfläche (5) und eine asphärische Fläche (5) aufweist und
    dass die Eintrittsblende für das Messlicht (4) so angeordnet ist, dass das Messlicht (4) schräg auf das dispersive Element (2) einstrahlt und etwa senkrecht vom dispersiven Element (2) reflektiert wird, sodass eine Vergrößerung der Öffnung in spektraler Richtung entsteht, welche den Abbildungsmaßstab auf dem Detektor (3) in spektraler Richtung verkleinert.

2.  Spektrometer nach Anspruch 1, **dadurch gekennzeichnet, dass** die nicht sphärische Fläche (5) eine asphärische Fläche, Freiformfläche oder in separaten Zonen der Linse (1) zonenabhängige diffraktive Struktur aufweist.

3.  Spektrometer nach Anspruch 2, **dadurch gekennzeichnet, dass** die nicht sphärische Fläche (5) rotationssymmetrisch ist.

4.  Spektrometer nach einem der Ansprüche 1 bis 3, **dadurch gekennzeichnet, dass** die Linse (1) optische Funktionen in separaten Zonen der Linse (1) bereitstellt.

5.  Spektrometer nach Anspruch 4, **dadurch gekennzeichnet, dass** die optischen Funktionen Kollimation und Refokussierung für das Messlicht (4) sind.

6.  Spektrometer nach einem der Ansprüche 1 bis 5, **dadurch gekennzeichnet, dass** die Beeinflussung der Abbildung eine wellenlängenspezifische Korrektur für das spektral zerlegte Messlicht (4) umfasst.

7.  Spektrometer nach einem der Ansprüche 1 bis 6, **dadurch gekennzeichnet, dass** die Linse (1) refraktiv, diffraktiv oder hybrid gestaltet ist.

8.  Spektrometer nach einem der Ansprüche 1 bis 7, **dadurch gekennzeichnet, dass** die Linse (1) durch ein replizierendes Verfahren wie Blankpressen oder Präzisionsblankpressen oder Spritzgießen oder Kunststoffspritzgießen hergestellt ist.

9.  Spektrometer nach einem der Ansprüche 1 bis 8, **dadurch gekennzeichnet, dass** der Detektor (3) in einer Zeile oder in einer Matrix angeordnete Bildelemente aufweist.

10. Abstandsmesssystem oder konfokal-chromatisches Abstandsmesssystem, mit einem Spektrometer nach einem der Ansprüche 1 bis 9.

11. Verfahren zum Betreiben eines Spektrometers nach einem der Ansprüche 1 bis 9, wobei ein auf die Linse (1) geführtes Messlicht (4) mittels der Linse (1) auf das dispersive Element (2) projiziert, von dem dispersiven Element (2)

spektral zerlegt zur Linse (1) zurück reflektiert und mittels der Linse (1) auf den Detektor (3) geführt und auf diese Weise eine Abbildung auf den Detektor (3) erzeugt wird, und wobei als Linse (1) eine Einfachlinse oder Einzellinse mit zwei nicht sphärischen Flächen (5) oder einer Freiformfläche (5) und einer asphärischen Fläche (5) zur Beeinflussung der Abbildung verwendet wird.

## Claims

1. A spectrometer with an entrance aperture, a lens (1), a dispersive element (2), and a detector (3), wherein the spectrometer has a double pass arrangement, wherein measuring light (4) guided onto the lens (1) is projected onto the dispersive element (2) by means of the lens (1), is reflected back to the lens (1) by the dispersive element (2) in a spectrally dispersed manner, and is guided onto the detector (3) by means of the lens (1), wherein the lens (1) is a single lens or individual lens for influencing an imaging onto the detector (3) and wherein the dispersive element (2) is realized in the form of a planar reflection grating and is located at a suitable, predeterminable distance from the lens (1),

   characterized in that the single lens or individual lens comprises two non-spherical surfaces (5) or a free-form surface (5) and an aspherical surface and

   that the entrance aperture for the measuring light (4) is arranged such that the measuring light (4) is obliquely incident on the dispersive element (2) and is reflected approximately perpendicularly from the dispersive element (2) so that an enlargement of the opening in a spectral direction occurs that reduces the imaging scale on the detector (3) in the spectral direction.

2. The spectrometer according to claim 1, characterized in that the non-spherical surface (5) has an aspherical surface, free-form surface, or zone-dependent diffractive structure in different zones of the lens (1).

3. The spectrometer according to claim 2, characterized in that the non-spherical surface (5) is rotationally symmetrical.

4. The spectrometer according to any one of the claims 1 to 3, characterized in that the lens (1) provides optical functions in separate zones of the lens (1).

5. The spectrometer according to claim 4, characterized in that the optical functions are collimation and refocusing for the measuring light (4).

6. The spectrometer according to any one of the claims 1 to 5, characterized in that the influencing of the imaging comprises a wavelength-specific correction for the spectrally dispersed measuring light (4).

7. The spectrometer according to any one of the claims 1 to 6, characterized in that the lens (1) is of refractive, diffractive, or hybrid design.

8. The spectrometer according to any one of the claims 1 to 7, characterized in that the lens (1) is produced by a replicating process such as, for example, blank pressing or precision blank pressing or injection molding or plastic injection molding.

9. The spectrometer according to any one of the claims 1 to 8, characterized in that the detector (3) comprises image elements arranged in a line or in a matrix.

10. A distance measurement system or a confocal chromatic distance measurement system, comprising a spectrometer according to any one of the claims 1 to 9.

11. A method for operating a spectrometer according to any one of the claims 1 to 9, wherein a measuring light (4) guided onto the lens (1) is projected onto the dispersive element (2) by means of the lens (1), is reflected back to the lens (1) by the dispersive element (2) in a spectrally dispersed manner, and is guided onto the detector (3) by means of the lens (1), wherein in this manner an imaging onto the detector (3) is created, and wherein a single lens or individual lens with two non-spherical surfaces (5) or a free-form surface (5) and an aspherical surface (5) is used as the lens (1) for influencing the imaging.

**Revendications**

1. Spectromètre comprenant une fente d'entrée, une lentille (1), un élément dispersif (2) et un détecteur (3), le spectromètre présentant une configuration à double passage, dans laquelle une lumière de mesure (4) dirigée vers la lentille (1) est projetée, au moyen de la lentille (1), sur l'élément dispersif (2), réfléchie par l'élément dispersif (2) après décomposition spectrale en direction de la lentille (1), puis dirigée, au moyen de la lentille (1), vers le détecteur (3), la lentille (1) étant une lentille simple ou une lentille unique destinée à influencer la formation d'image sur le détecteur (3) et l'élément dispersif (2) étant réalisé sous la forme d'un réseau de réflexion plan et disposé à une distance appropriée prédéfinissable de la lentille (1),

   **caractérisé en ce que** la lentille simple ou la lentille unique comporte deux surfaces non sphériques (5), ou une surface de forme libre (5) et une surface asphérique (5) et
   **en ce que** la fente d'entrée destinée à la lumière de mesure (4) est disposée de telle sorte que la lumière de mesure (4) soit incidente obliquement sur l'élément dispersif (2) et réfléchie approximativement perpendiculairement par l'élément dispersif (2), de manière à produire un agrandissement de l'ouverture dans la direction spectrale, lequel réduit l'échelle de reproduction sur le détecteur (3) dans la direction spectrale.

2. Spectromètre selon la revendication 1, **caractérisé en ce que** la surface non sphérique (5) présente une surface asphérique, une surface de forme libre ou, dans des zones distinctes de la lentille (1), une structure diffractive dépendante des zones.

3. Spectromètre selon la revendication 2, **caractérisé en ce que** la surface non sphérique (5) présente une symétrie de révolution.

4. Spectromètre selon l'une des revendications 1 à 3, **caractérisé en ce que** la lentille (1) assure des fonctions optiques dans des zones distinctes de la lentille (1).

5. Spectromètre selon la revendication 4, **caractérisé en ce que** les fonctions optiques sont la collimation et la remise au point de la lumière de mesure (4).

6. Spectromètre selon l'une des revendications 1 à 5, **caractérisé en ce que** l'influence sur la formation d'image comprend une correction spécifique en longueur d'onde pour la lumière de mesure (4) décomposée spectralement.

7. Spectromètre selon l'une des revendications 1 à 6, **caractérisé en ce que** la lentille (1) est réalisée de manière réfractive, diffractive ou hybride.

8. Spectromètre selon l'une des revendications 1 à 7, **caractérisé en ce que** la lentille (1) est fabriquée par un procédé de réplication tel que le moulage à chaud, le moulage de précision, ou le moulage par injection ou l'injection de plastique.

9. Spectromètre selon l'une des revendications 1 à 8, **caractérisé en ce que** le détecteur (3) comporte des éléments d'image disposés en ligne ou en matrice.

10. Système de mesure de distance ou système de mesure de distance confocal chromatique, comprenant un spectromètre selon l'une des revendications 1 à 9.

11. Procédé de fonctionnement d'un spectromètre selon l'une des revendications 1 à 9, dans lequel une lumière de mesure (4) dirigée vers la lentille (1) est projetée, au moyen de la lentille (1), sur l'élément dispersif (2), réfléchie par l'élément dispersif (2) après décomposition spectrale en direction de la lentille (1), puis dirigée, au moyen de la lentille (1), vers le détecteur (3), de manière à former une image sur le détecteur (3), et dans lequel la lentille (1) utilisée est une lentille simple ou une lentille unique comportant deux surfaces non sphériques (5), ou une surface de forme libre (5) et une surface asphérique (5), destinées à influencer la formation d'image.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9964443 B1
- US 2014233029 A1
- US 2006038994 A1
- US 6757113 B1
- US 5329353 A
- DE 102017122689 A1
- US 7817274 B2